# EUROPÄISCHE PATENTSCHRIFT

(11) **EP 1 081 068 B1**
(45) Veröffentlichungstag und Bekanntmachung des Hinweises auf die Patenterteilung: **04.05.2005**
(21) Anmeldenummer: 00115880.7
(22) Anmeldetag: 25.07.2000
(51) Int. Cl.: B65G 47/88, B65G 47/08

(54) **Vorrichtung zum Vereinzeln und Gruppieren von Flaschen**
Device for singulating and grouping bottles
Dispositif permettant de séparer et grouper des bouteilles

(30) Priorität: 01.09.1999 DE 29915299 U
(43) Veröffentlichungstag der Anmeldung: 07.03.2001
(73) Patentinhaber: SIG Technology AG, 8212 Neuhausen am Rheinfall (CH)
(72) Erfinder: Feldhaus, Markus, 48683 Ahaus (DE); Niehr, Thomas, 48683 Ahaus (DE)
(74) Vertreter: Busse & Busse Patentanwälte

(56) Entgegenhaltungen:
- EP-A- 0 485 344
- CH-A- 263 928
- GB-A- 2 260 742
- US-A- 4 601 384
- US-A- 5 919 028

## Beschreibung

Die Erfindung bezieht sich auf eine Vorrichtung zum Vereinzeln von entlang einer einspurigen Bewegungsbahn in Staukontakt geförderten Flaschen gemäß dem Oberbegriff des Anspruchs 1.

Bei einer bekannten Vorrichtung dieser Art (DE-A-197 16 779) besteht das Vereinzelungsglied aus einem oberhalb der Bewegungsbahn angeordneten, um eine horizontale, zur Bewegungsrichtung der Flaschen umlaufenden Drehkörper, der einen Schneckengang umfaßt, in den die Flaschen mit ihrem Flaschenhalsende nacheinander einlaufen und bei Durchlaufen zu einer Gruppe mit vorgegebenen Abstand auseinandergezogen werden. Die so auf Abstand gebrachten Flaschen werden dann von einem weiteren Förderer erfaßt, der als umlaufendes Band mit U-förmigen Aufnahmen ausgebildet ist, die den Hals der Flaschen unterhalb des Transportrings am Ende der Führungsschienen ergreifen und entlang einer von dem Förderer vorgegebenen Bewegungsbahn in Reihe hintereinander mitnehmen.

Anstelle eines Vereinzelungsgliedes in Form eines Drehkörpers mit Schneckengang ist es bei einer Vorrichtung zum Vereinzeln von Dosen (US-A-4 601 384) bekannt, einen Nocken vorzusehen, der um eine zu den Mittelachsen der Dosen parallele, seitlich zu einem Dosen-Fallschacht angeordnet ist und einen kreisförmigen Rückhaltebereich und einen eingezogenen Vereinzelungsbereich aufweist, die am Dosenumfang angreifen. Der Vereinzelungsbereich bildet eine Tasche, in der eine Dose einzeln gefördert und nach einer Teilumdrehung des Nockens in einen sich anschließenden Fallschacht abgeworfen oder einer Weiterbearbeitungsstation übergeben wird.

Die Erfindung befaßt sich mit dem Problem einer besonders schnellen und wirksamen Überführung einer Flaschengruppe an einen Flaschenträger einer Weiterbearbeitungsmaschine, und löst das Problem durch eine Vorrichtung mit den Merkmalen des Anspruchs 1. Die Vorrichtung nach der Erfindung schafft einen gleichzeitigen Querausschub der Flaschen einer Flaschengruppe aus den Führungsschienen, wodurch die Flaschen der jeweils ausgeschobenen Flaschengruppe eine Weiterförderung auf parallelen Förderbahnen erfahren.

Wird als Vereinzelungsglied ein Nocken gemäß Anspruch 6 vorgesehen, kann die Gruppenbildung mit großer Geschwindigkeit und Präzision erfolgen, so daß Gruppenbildung und Überführung einer Flaschengruppe an einen Flaschenträger einer Weiterverarbeitungsmaschine die Arbeitstaktvorgaben von Flaschenfüllmaschinen oder sonstige Maschinen der Weiterbearbeitung erfüllen könnte.

Weitere Einzelheiten und Wirkungen ergeben sich aus der nachfolgenden Beschreibung und der Zeichnung, in der ein Ausführungsbeispiel des Gegenstands der Erfindung schematisch näher veranschaulicht ist. In der Zeichnung zeigen:
- Fig. 1: eine schematische, abgebrochene Draufsicht auf eine Vorrichtung nach der Erfindung,
- Fig. 2: eine abgebrochene Seitenansicht einer auf Abstand positionierten Reihe von Flaschen im Einlaufbereich eines Weiterförderers, und
- Fig. 3 bis 7: unterschiedliche Stellungen des Vereinzelungsgliedes während eines Vereinzelungsvorgangs.

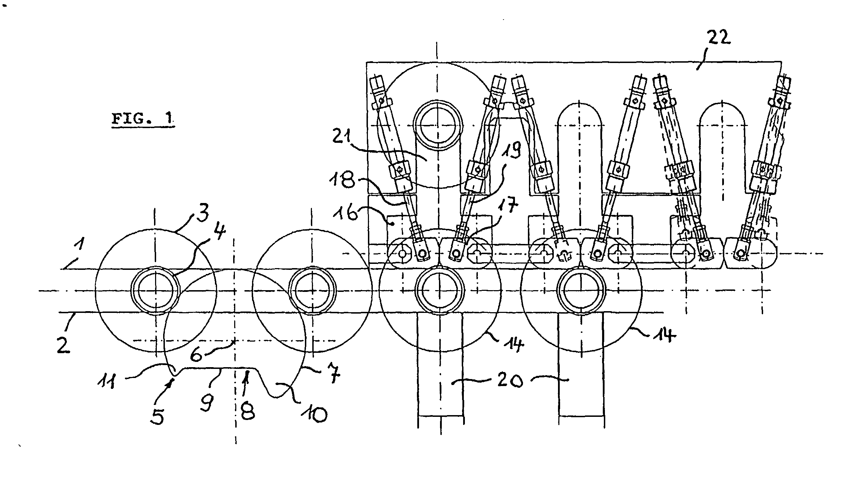

Die in Fig. 1 dargestellte Vorrichtung umfaßt zwei Führungsschienen 1,2, die eine einspurige Bewegungsbahn für Flaschen definieren, die entlang dieser Bewegungsbahn angetrieben von beispielsweise Blasluft in Stau- oder Stoßkontakt gefördert werden. Für eine weitere Bearbeitung der Flaschen beispielsweise durch Waschen, Sterilisieren, Befüllen, Verschließen in Weiterbearbeitungsmaschinen müssen die herantransportierten Flaschen vereinzelt werden und eine formatunabhängige gegenseitige Position erhalten, in der ihre Längsmittelachsen untereinander einen gleichen, vorgegebenen Abstand haben.

Zur Vereinzelung der herantransportierten Flaschen 3, die sich mit ihrem im Halsbereich befindlichen Tragring 4 auf den Führungsschienen 1,2 abstützen, ist ein Vereinzelungsglied 5 vorgesehen, das als kreisscheibenförmiger, flacher Nocken ausgebildet und um eine zu den Flaschenmittelachsen 15 parallele, seitlich neben der Führungsschiene 2 gelegene Drehachse 6 (in Fig.1 und 3 bis 7 im Uhrzeigersinn) umläuft.

Der Nocken 5 weist an seinem Umfang eine Führungsfläche auf, die einen kreisförmigen Rückhaltebereich 7 und einen eingezogenen Vereinzelungsbereich 8 umfaßt. Der Vereinzelungsbereich besteht dabei aus einem sehnenförmigen, gradlinigen Ausschnitt 9, der an seinem einen Ende mit einem ersten, trennkeilförmigen Vorsprung 10 und an seinem anderen Ende mit einem eine Anschlagnase bildenden zweiten Vorsprung 11 in den kreisförmigen Rückhaltebereich 7 übergeht.

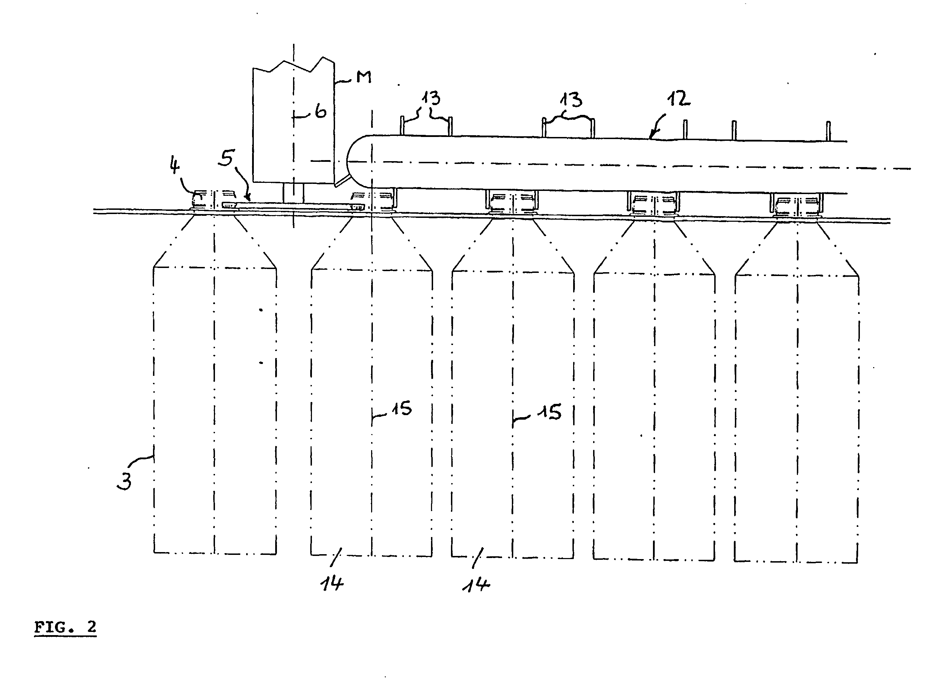

Der entweder unmittelbar oberhalb oder unterhalb der Führungsschienen 1,2 am Flaschenhals der in Staukontakt herangeförderten Flaschen 3 angreifende Nocken 5 läuft im Betrieb durch einen Motor M angetrieben um, wobei die Antriebsgeschwindigkeit synchron auf die Antriebsgeschwindigkeit eines Weiterförderers 12 (Fig. 2) abgestimmt ist, der mit Mitnehmergliedern 13 in einem Abstand besetzt ist, der dem Abstand der Flaschen 14 nach der Vereinzelung und Gruppierung entspricht.

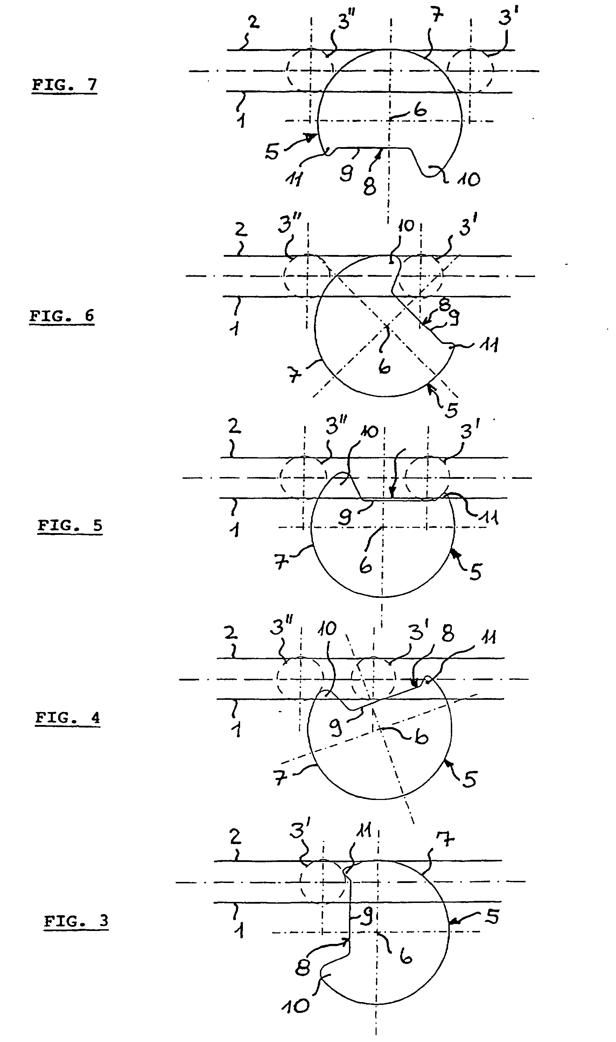

Den Vorgang der Vereinzelung veranschaulichen die Fig. 3 bis 7 in schematischer Form. Fig.3 zeigt den Nocken 5 mit senkrecht zur Längserstreckung der Führungsschienen 1,2 ausgerichteten sehnenförmigen Ausschnitt 9. Der Nocken 5 wirkt in dieser Stellung als Anschlag für den Halsbereich 3' einer in Staukontakt herangeförderten Flasche, die wie dargestellt-mit diesem Halsbereich 3' an der Anschlagnase 11 anliegt. Bei Drehen in Uhrzeigerrichtung gelangt der Nocken 5 mit seinem trennkeilförmigen Vorsprung 10 in den Zwischenraum zwischen dem zuvor an der Anschlagnase 11 anliegenden Halsbereich 3' und dem Halsbereich 3" einer nachfolgenden Flasche, wie dies Fig.4 veranschaulicht. Der sich an den trennkeilförmigen Vorsprung 10 in Drehrichtung anschließende kreisförmige Rückhaltebereich 7 bildet für die mit ihrem Halsbereich 3" an ihm anliegende Flasche eine Rückhaltung, die bis zum Abschluß des Vereinzelungsvorganges wirksam ist, wie das die Fig. 5 bis 7 deutlich machen.

Während des Weiterdrehens des Nockens 5 bewegt sich lediglich die mit ihrem Halsbereich 3' im Vereinzelungsbereich 8 befindliche Flasche weiter nach rechts, bis sie in Fig. 7 ihre Vereinzelungsstellung erlangt hat, in der sie von dem Weiterförderer 12 erfaßt und weitergefördert wird. Erst bei Übergang des Halsbereiches 3" der nachfolgenden Flasche in den Vereinzelungsbereich 8 in einer Drehstellung des Nockens kurz vor Wiedererreichen der Stellung in Fig. 3 erhält die nächste der zu vereinzelnden Flaschen 3 eine Vorwärtsbewegung aus der Stellung in Fig. 7 in die Stellung nach Fig. 3, wonach sich der vorbeschriebene Vereinzelungsvorgang entsprechend wiederholt.

Fig. 2 veranschaulicht die vereinzelten und gruppierten Flaschen 14 im Bereich des Weiterförderers 12, wobei die Anzahl der zu gruppierenden Flaschen 14 davon abhängig ist, welche Anforderungen hieran eine Weiterverarbeitungsmaschine stellt. Beispielsweise können 10 Flaschen eine Gruppe bilden.

Sobald der Gruppierungsvorgang abgeschlossen ist, befinden sich sämtliche Flaschen 14 einer Gruppe in einer Stellung neben einer Unterbrechung in (beispielsweise) der Führungsschiene 1. Diese Unterbrechungen werden bei dem dargestellten Beispiel durch türflügelartig aus- und einschwenkbare Führungsschienenteile 16,17 eingenommen, die durch Federn 18,19, z.B. Gasdruckfedern, in ihrer Schließstellung gehalten sind. Die Führungsschienenteile 16,17 übernehmen von der Führungsschiene 1 in den Unterbrechungen jeweils die gleichseitige Abstützung der Flaschen 14 an deren Tragring 4.

Den Unterbrechungen in der Führungsschiene 1 liegen auf seiten der anderen Führungsschiene 2 Auswerfer 20 gegenüber, die Bestandteil der anderen Führungsbahn bilden, und durch die die jeweils vor den ausschwenkbaren Führungsschienenteilen 16,17 gelegenen Flaschen 14 gegen diese einrückbar sind. Die unmittelbar gegen den Flaschenhals der Flaschen 14 drückenden, durch einen nicht dargestellten Antrieb, vorzugweise Druckmittelantrieb, betätigbaren Auswerfer 20 schieben unter Ausschwenken der Führungsschienenteile 16,17 die Flaschen 14 aus ihrer Bewegungsbahn zwischen den Führungsschienen 1,2 unter rechtem Winkel heraus, wobei sie zwischen die sich öffnenden Führungsschienenteile 16,17 gelangen, die in Offenstellung gemeinsam eine quer gerichtete Übergangsbahn begrenzen. Aus der Übergangsbahn zwischen den offenstehenden Führungsschienenteilen 16,17 gelangen die Flaschen 14 im weiteren Ablauf des Ausschiebevorganges in Aufnahmeschlitze 21 in einem Flaschenträger 22, der dann den weiteren Transport der Flaschengruppe durch die Weiterbearbeitungsmaschine vornimmt.

Mit der Beendigung des Ausschiebevorganges kehren unter der Wirkung ihrer Federn 18,19 die Führungsschienenteile 16,17 aus ihrer Offenstellung in ihre Schließstellung zurück, so daß nunmehr die Führungsschienen 1,2 für die Aufnahme der Flaschen 14 einer nachfolgenden Flaschengruppe bereit sind.

## Patentansprüche

1. Vorrichtung zum Vereinzeln von entlang einer einspurigen Bewegungsbahn in Staukontakt geförderten Flaschen (3) und zum formatunabhängigen Positionieren der vereinzelten Flaschen (14) in einer Gruppe mit untereinander gleichen, vorgegebenen Abständen zwischen den Flaschenmittelachsen (15), mit Führungsschienen (1,2), welche die Flaschen (3;14) bis zum Abschluß der Gruppenbildung an deren Transportring (4) am Flaschenhals führen, mit einem um eine ortsfeste Achse drehbaren, am Flaschenhals angreifenden Vereinzelungsglied (5) und mit einem mit Mitnehmergliedem (13) am Flaschenhals vereinzelter und auf Abstand positionierter Flaschen (14) angreifenden Weiterförderer (12), **dadurch gekennzeichnet, daß** eine der beiden Führungsschienen (1,2) in einem in Flaschenförderrichtung hinter dem Vereinzelungsglied (5) gelegenen Bereich mit einer der Anzahl der vereinzelten Flaschen (14) einer Gruppe entsprechenden Anzahl von Unterbrechungen versehen ist, die seitliche Austrittsöffnungen für die auf Abstand positionierten Flaschen (14) einer Gruppe bilden, und in den Unterbrechungen diese einnehmende Führungsschienenteile (16,17) ausschwenkbar angeordnet sind, wobei den Unterbrechungen in der einen Führungsschiene (1) auf seiten der anderen Führungsschiene (2) Auswerfer (20) gegenüberliegen, durch die mit ihrem Halsbereich vor jeweils den ausschwenkbaren Führungsschienenteilen (16,17) gelegene Flaschen (14) gegen die Führungsschienenteile (16,17) einrückbar und zwischen den sich gegen Federdruck öffnenden Führungsschienenteilen (16,17) hindurch ausschiebbar sind.

2. Vorrichtung nach Anspruch 1, **dadurch gekennzeichnet, daß** jeder Unterbrechung zwei türflügelartig aus- und einschwenkbare Führungsschienenteile (16,17) zugeordnet sind, die durch Federn (18,19) in ihrer Schließstellung gehalten und durch Querausschieben einer ihnen mit ihrem Halsbereich gegeüberliegenden Flaschen (14) gegen die Wirkung der Federn (18,19) in eine Offenstellung schwenkbar sind, in der sie zwischen sich eine quergerichtete Übergangsbahn begrenzen.

3. Vorrichtung nach Anspruch 2, **dadurch gekennzeichnet, daß** als die Führungsschienenteile (16,17) in Schließstellung vorspannende Federn (18,19) Gasdruckfedem vorgesehen sind.

4. Vorrichtung nach einem der Ansprüche 1 bis 3, **dadurch gekennzeichnet, daß** die Auswerfer (20) Teil der anderen Führungsschiene (2) bilden.

5. Vorrichtung nach einem der Ansprüche 1 bis 4, **dadurch gekennzeichnet, daß** das die bei geöffneten Führungsschienenteilen (16,17) von diesen gebildetete Übergangsbahn jeweis einem Flaschenaufnahmeschlitz (21) in einem Flaschenträger (22) einer Weiterbearbeitungsmaschine gegenüberliegt.

6. Vorrichtung nach einem der Ansprüche 1 bis 5, **dadurch gekennzeichnet, daß** als Vereinzelungsglied ein Nocken (5) vorgesehen ist, der um eine zu den Flaschenmittelachsen (15) parallele, seitlich neben einer Führungsschiene (2) angeordnete Drehachse (6) drehbar ist und am Umfang eine mit dem Halsbereich herangeförderter Flaschen (3) in Eingriff gelangende Führungsfläche aufweist, die einen kreisförmigen Rückhaltebereich (7) und einen eingezogenen Vereinzelungsbereich (8) umfaßt, der den Halsbereich der zu vereinzelnden Flaschen (3) bei der Vereinzelung und fortschreitenden Abstandsbildung führt und vortreibt, wobei der Vereinzelungsbereich (8) einen sehnenförmigen Ausschnitt (9) aufweist, der an seinem einen Ende mit einen trennkeilförmigen Vorsprung (10) und an seinem anderen Ende mit einem eine Anschlagnase bildenden Vorsprung (11) in den kreisförmigen Rückhaltebereich (7) übergeht.

7. Vorrichtung nach Anspruch 6, **dadurch gekennzeichnet, daß** der Nocken (5) als flache Kreisscheibe ausgebildet und unmittelbar ober oder unterhalb einer Führungsschiene (2) am Halsbereich zu vereinzelnder Flaschen (3) angreift.

8. Vorrichtung nach Anspruch 6 oder 7, **dadurch gekennzeichnet, daß** der Nocken (5) mittels eines Motors in synchroner Abstimmung zum Weiterförderer (12) angetrieben ist.

## Claims

1. A device for the marshalling into singles of bottles (3) conveyed in stacked contact along a single-track path of motion and for the format-independent positioning of the bottles (14) marshalled into singles in a group with mutually equal, predetermined distances between the bottle centre-lines (15), with guide rails (1, 2) which guide the bottles (3, 14) at the bottle neck at their transport ring (4) up to completion of the group formation, with an element (5) for marshalling into singles, which is rotatable about a stationary axis and engages the bottle neck, and with an onward conveyor (12) which with entrainer elements (13) engages the bottle neck of bottles (14) marshalled into singles and positioned spaced apart, **characterised in that** one of the two guide rails (1, 2) is provided, in a region situated behind the element (5) for marshalling into singles as viewed in the bottle-conveying direction, with a number of interruptions corresponding to the number of bottles (14) of a group marshalled into singles, said interruptions forming lateral exit openings for the bottles (14) of a group positioned spaced apart, and there are arranged in the interruptions guide rail parts (16, 17) occupying the latter and capable of being swung out, whereby, opposite the interruptions in the one guide rail (1), there lie on the side of the other guide rail (2) ejectors (20), by means of which bottles (14), situated with their neck region in front of the respective guide rail parts (16, 17) capable of being swung out, can be moved in against the guide rail parts (16, 17) and pushed out between the guide rail parts (16, 17) opened against spring pressure.

2. The device according to claim 1, **characterised in that** there are assigned to each interruption two guide rail parts (16, 17) capable of being swung in and out in a door-leaf manner, which guide rail parts are held by springs (18, 19) in their closed position and can be swung into an open position against the action of the springs (18, 19) by the transverse pushing-out of a bottle (14) lying opposite them with its neck region, in which open position they bound between them a transversely directed transfer path.

3. The device according to claim 2, **characterised in that** gas-pressure springs are provided as springs (18, 19) preloading the guide rail parts (16, 17) in the closed position.

4. The device according to any one of claims 1 to 3, **characterised in that** the ejectors (20) form part of the other guide rail (2).

5. The device according to any one of claims 1 to 4, **characterised in that** the transfer path formed by the guide rail parts (16, 17) when the latter are opened lies in each case opposite a bottle receiving slot (21) in a bottle carrier (22) of a further processing machine.

6. The device according to any one of claims 1 to 5, **characterised in that** a cam (5) is provided as the element (5) for marshalling into singles, which cam is rotatable about a rotary axis (6) arranged parallel to the bottle centre-line (15) and laterally beside the guide rail (2) and has on the periphery a guide face which engages with the neck region of bottles (3) being advanced, said guide face comprising a circular retention portion (7) and a recessed portion (8) for marshalling into singles, the latter portion guiding and advancing the neck region of the bottles (3) to be marshalled into singles during the marshalling and progressive spacing-apart, whereby the portion (8) for marshalling into singles has a chord-like section (9), which merges into the circular retention portion (7) with a separating-wedge-shaped projection (10) at its one end and with a projection (11) forming a stop boss at its other end.

7. The device according to claim 6, **characterised in that** the cam (5) is designed as a flat circular disc and engages the neck region of bottles (3) to be marshalled into singles directly above or below a guide rail (2).

8. The device according to claim 6 or 7, **characterised in that** the cam (5) is driven by means of a motor in synchronous adjustment to the onward conveyor (12).

## Revendications

1. Dispositif permettant de séparer des bouteilles (3) transportées en contact par engorgement le long d'un chemin de déplacement à une voie et de positionner les bouteilles séparées (14) indépendamment du format dans un groupe avec des distances prédéterminées identiques les unes par rapport aux autres entre les axes médians de bouteille (15), présentant des rails de guidage (1,2) qui guident les bouteilles (3,14) jusqu'à la fin de la formation de groupe sur leur anneau de transport (4) sur le col de bouteille, un organe de séparation (5) s'appliquant sur le col de bouteille et pouvant tourner autour d'un axe fixe et un transporteur en aval (12) s'appliquant au moyen d'éléments entraîneurs (13) sur le col de bouteille de bouteilles (14) séparées et positionnées à distance, **caractérisé en ce que** l'un des deux rails de guidage (1,2) est pourvu d'un nombre d'interruptions correspondant au nombre des bouteilles séparées (14) d'un groupe dans une zone située derrière l'organe de séparation (5) dans le sens du transport des bouteilles, interruptions qui forment des ouvertures de sortie latérales destinées aux bouteilles (14) d'un groupe positionnées à distance et **en ce que** dans les interruptions sont disposées de façon à pivoter vers l'extérieur des parties de rail de guidage (16,17) prenant la place de ces interruptions, des éjecteurs (20) faisant face aux interruptions dans ledit un rail de guidage (1), sur l'autre rail de guidage (2), éjecteurs par lesquels des bouteilles (14) situées chacune avec leur zone de col devant les parties de rail de guidage (16,17) pouvant pivoter vers l'extérieur peuvent être insérées contre les parties de rails de guidage (16,17) et peuvent être poussées à travers entre les parties de rail de guidage (16,17) s'ouvrant contre la pression d'un ressort.

2. Dispositif selon la revendication 1, **caractérisé en ce qu'**à chaque interruption sont associées des parties de rail de guidage (16,17) en forme de battants de porte et pouvant pivoter vers l'extérieur et l'intérieur, ces parties de rail de guidage étant maintenues en leur position de fermeture par des ressorts (18,19) et pouvant pivoter par la poussée transversale sur une bouteille (14) leur faisant face contre l'action des ressorts (18,19) dans une position d'ouverture, dans laquelle elles délimitent entre elles un chemin de transfert orienté transversalement.

3. Dispositif selon la revendication 2, **caractérisé en ce que** des ressorts à pression de gaz sont prévus en tant que ressorts (18,19) précontraignant les parties de rail de guidage (16,17) en position de fermeture.

4. Dispositif selon l'une quelconque des revendications 1 à 3, **caractérisé en ce que** les éjecteurs (20) forment une partie de l'autre rail de guidage (2).

5. Dispositif selon l'une quelconque des revendications 1 à 4, **caractérisé en ce que** chaque chemin de transfert formé par les parties de rail de guidage (16,17) lors de leur ouverture est situé en face d'une fente de logement de bouteille (21) dans un support de bouteilles (22) d'une machine pour traitement ultérieur.

6. Dispositif selon l'une quelconque des revendications 1 à 5, **caractérisé en ce qu'**une came (5) est prévue en tant qu'organe de séparation, qui peut tourner autour d'un axe de rotation (6) disposé latéralement à côté d'un rail de guidage (2), est parallèle aux axes médians de bouteille (15) et présente sur la circonférence une surface de guidage parvenant à se mettre en prise avec des bouteilles (3) transportées par la zone de col et comportant une zone d'appui circulaire (7) et une zone de séparation renfoncée (8) qui guide et fait avancer la zone de col des bouteilles à séparer (3) lors de la séparation et la formation de distance progressive, la zone de séparation (8) présentant une découpe en forme de corde (9), qui se transforme à l'une de ses extrémités comportant une saillie en forme de coin de séparation (10) et à son autre extrémité comportant une saillie formant un nez de butée (11) en la zone d'appui circulaire (7).

7. Dispositif selon la revendication 6, **caractérisé en ce que** la came (5) est conformée en disque circulaire plat et s'applique directement au-dessus ou au-dessous d'un rail de guidage (2) sur la zone de col de bouteilles à séparer (3).

8. Dispositif selon la revendication 6 ou 7, **caractérisé en ce que** la came (5) est entraînée au moyen d'un moteur en réglage synchrone par rapport au transporteur en aval (12).
